# EUROPEAN PATENT APPLICATION

(11) **EP 3 035 229 A1**
(43) Date of publication of application: **22.06.2016**
(21) Application number: 13895110.8
(22) Date of filing: 08.10.2013
(51) Int. Cl.: G06F 21/84

(54) **METHOD AND SYSTEM FOR PREVENTING IMAGE CAPTURES OF THE INFORMATION DISPLAYED ON A SCREEN, AND COMPUTER PROGRAM FOR SAME**

(30) Priority: 04.10.2013 EP 13382390
(71) Applicant: Telefonica Digital España, S.L.U., 28013 Madrid (ES)
(72) Inventor: PIELOT, Martin, E-28013 Madrid (ES)
(74) Representative: Carlos Hernando, Borja
(86) International application number: PCT/ES2013/070698
(87) International publication number: WO 2015/049397

(57) **Abstract**

Method and system for image capturing prevention of information displayed on a screen, and computer program thereof

The method comprising: presenting a textual information on a screen of at least one user computing device therefore providing a bitmapped textual image; limiting the time in which said bitmapped textual image is presented on said screen; generating at least two background bitmaps of said bitmapped textual image by using a colour for background pixels of said background bitmaps different from colour for text pixels; and displaying said bitmapped textual image on top of one of said at least two background, wherein a percentage of the background pixels of any of said at least two background bitmaps, that are randomly selected, is altered into said colour of text pixels so that obtaining a time-changing combined image cannot be done by a screenshot.

The system is configured to implement the method.

## Description

### Field of the art

The present invention relates generally to information prevention capturing methods and systems, and more particularly to a method, system and computer program for image capturing prevention of information displayed on a screen by rapidly alternating cluttered background images.

### Background of the invention

In the digital age, a huge amount of textual information is shared and exchanged online all the time. The problem is that almost all forms of electronic communication are stored by default or can be made persistent for later retrieval. One embarrassing word or sentence published on a website, timeline, or shared via an instant messenger, can easily be recalled even after years. Consequently, existing services do not allow the kind of free information exchange that people do in spoken day-to-day conversations. Instead, there is a potential that people restrain themselves to non-critical, politically correct messages only. This invention aims at bring back the ephemerality of the spoken word into written conversations.

There is a new group of services that address this issue by limiting the time that shared textual information can be viewed. For instance, *TigerText* is a service that allows exchanging messages between its users which are available for the web and as smartphone applications. Messages are encrypted during the communication and can be set to expire after a given timespan. Typically, messages are lasting for hours or days. It was designed to allow Health Insurance Portability and Accountability Act (HIPAA) compliant exchange of information between healthcare workers and patients.

On another hand, *SnapChat,* is a messenger application for smartphones that allows sharing pictures and videos. When a received picture or video is first opened, a timer of a few seconds starts. As soon as it runs out, the picture cannot be viewed anymore. One patent with *SnapChat* is US-B1-8428453 "Single mode visual media capture", which protects the idea that the phone either records a photo or a video, depending on how long a user presses the "record" button. *SnapChat* also has a few more features to protect its content. The maximum lifetime of a photo/video is 10 seconds. Users can take a screenshot during this time. While this action cannot be prevented, it is detected (not in 100% of the times) and the author is informed that a screenshot has been taken.

Recently, a number of applications have been released that support to send text messages with limited lifetime. Popular examples are *Facebook Poke, Burn Note, or Blink Messenger.* Like *SnapChat,* these messages can only be accessed for a very limited amount of time, usually for a few seconds only. This way, users do not have much time to create persistent screenshots.

To further protect the message, *Burn Note* implements a spotlight metaphor: when the user does not touch the screen, the message is completely covered by a black overlay. Only when touching the message box, the area around the finger gets "illuminated", i.e. the part of the text close to the finger becomes visible. By moving the finger over the text, the user can read the message part by part. However, the message is never visible completely.

All of these approaches are susceptible to creating persistent copies by doing a screenshot. On most mobile devices, this is done by pressing two hardware buttons at the same time. Only Burn Note proposes a more clever approach through the spotlight metaphor. Still, the user can highlight critical parts of the messages and then take a screenshot of this part.

Other patents can be also found in this field. For instance, US-B1-8429745, "Systems and methods for data loss prevention on mobile computing systems", presents a method to protect users from taking illicit screenshots with their phones. It involves running a background service that monitors the number of screenshots. If an application enters a sensitive executing path and the number of screenshots increase, it performs a "security action", such as deleting the added screenshot. This approach may prevent people from taking screenshots. However, it requires that the consumer of an application is willing to run the code that prevents taking illicit screenshots.

Similarly, a number of approaches related to making text unreadable can be found to create CAPTCHAs. These approaches aim at making text unreadable for Object Character Recognition (OCR) Algorithms, i.e. computer programs that can automatically "read" a text. The typical use case to prevent a program from reading a text is to make sure that requests are send by a human, not a machine.

Patent US-B1-8397275 presents "Time-varying sequenced image overlays for CAPTCHA", that is showing text on images, where parts of the initial image are occluded, so that only parts of it are visible. For example, for a word, the algorithm would first show the left part of the original image, and then the right part in a subsequent step. The alterations should make sure that each part of the original image is revealed at least once. If a CAPTCHA is requested, it contains executable code, which shows those images in alternating orders. The idea is that humans will be able to quickly recognize the shown content, while text and image recognition programs can only perform this task with great effort. One of the downside of this approach is that, when taking a screenshot, parts of the text will be shown clearly. Humans are very adept at completing partially shown, well-known shapes, such as letters. Also, a screenshot may contain just that specific part that allows reconstructing the meaning of the message. Finally, taking a series of screenshots, so that each of the alterations is stored at least once, can easily break the algorithm.

US-A1-2013074150 "Presenting Visual Challenges for Verifying Human Interaction" introduces the concept of presenting obscured text with changes over time. By systematically altering the text over time, such as moving the letters slightly, the visualization again prevents OCR algorithms from reading text.

US-A1-20120266215 presents "Captcha Image Scramble", a way to determine a modified image for a CAPTCHA. The basic approach is to cut an image into multiple pieces, and construct a second image by randomly rearranging these pieces. Alongside the scrambled image, it sends CSS Code to restore the original image from the scrambled one. This is done on the client-side, i.e. when the CAPTCHA has reached the browser. The advantage of this approach is that will require great effort to restore the original image when just receiving the scrambled image. This approach, again, does not provide security from making screenshots of the images, either the original or the scrambled one. With enough time, a person should be able to decipher the text from the randomized picture. Hence, while it provides protection against algorithms that attack during the transmission of the CAPTCHA, it is not designed to prevent long-term storage of content.

US-A-5905505 discloses a "Method and system for copy protection of on-screen display of text". The goal of this method is, again, to prevent OCR algorithms to read text. The method creates two bitmaps and, in each of them, turns a random selection of 25% of the pixels into (dark) text colour. These images are then rapidly alternated, and the text is displayed on top of it. By the rapid alteration, the human eye averages out the differences between the images, so that the text becomes clear. When taking a screenshot for an OCR algorithm, however, the image is cluttered with pixels and becomes hard/impossible to interpret algorithmically.

While the amount of noise added by this approach is sufficient for deterring OCR algorithms, screenshots of a single state of the image remain readable for humans. According to the patent text "The grey background is changing constantly and thus somewhat annoying, but the text appears clearly. If, however, the user attempts to screen dump the window, the result is one of the two bitmaps with the cluttered background data. With a 25% dark-bit density level these screen dumps can only be read with some annoyance by the human eye, and certainly not by an OCR program."

In summary, previously proposed solutions don't solve the problem. Some of the problems with existing solutions are that for instance, the concept of deleting messages after a given timespan introduced by *TigerText* or *SnapChat* does not prevent users from creating persistent copies by doing a screenshot. On most devices, this is done by pressing two hardware buttons at the same time. Only *Burn Note* proposes a more clever approach through the spotlight metaphor. Still, the user can highlight critical parts of the messages and then take a screenshot of this part.

The approach described in US-B1-8429745, i.e. using a background service to delete screenshots created while the message was viewed, may prevent people from taking screenshots. However, it requires that the consumer of an application is willing to run the code that prevents taking illicit screenshots.

The general idea of scrambling text, which is suggested in several CAPTCHA algorithms, seems promising, however, in their current implementations, they do not prevent humans from being able to interpret a screenshot.

The approach introduced by US-A1-20120266215 will not help, because the image is supposed to be reconstructed for viewing. Hence, when the consumer reads the message and takes a screenshot, it will appear in clear text.

Similarly, the approach of obscuring text over time, again, does not provide security from making screenshots of the images, either the original or the scrambled one.

In the case of US-B1-8397275 and US-A1-2013074150 the text gets obscured and the obscured part changes over time. However, when doing a screenshot, parts of the text will still be shown clearly. Humans are very adept at completing partially shown, well-known shapes, such as letters. Also, a screenshot may contain just show that specific part that allows reconstructing the meaning of the message. Finally, taking a series of screenshots, so that each of the alterations is stored at least once, can easily break the algorithm.

US-A-5905505 comes closest to the proposed solution; the text becomes easier to read when background-noise images are presented in quick alteration. However, while the amount of noise added by this approach is sufficient for deterring OCR algorithms, screenshots of a single state of the image remain readable for humans. With a 25% dark bit density level these screen dumps can only be read with some annoyance by the human eye, and certainly not by an OCR program."

For all these reasons and others, there is a need for improved methods and systems for image capturing prevention of information when displayed on a screen being said image information displayed in a way that can be read by users and unreadable on screenshots.

### Summary of the Invention

According to a first aspect there is provided a method for image capturing prevention of information displayed on a screen, comprising as common techniques in the field: presenting a textual information on a screen of at least one user computing device, such as a smartphone, a tablet pc, etc., therefore providing a bitmapped textual image; limiting the time in which said bitmapped textual image is presented on said screen; generating at least two background bitmaps of said bitmapped textual image by using a colour for background pixels of said background bitmaps different from colour for text pixels; and displaying said bitmapped textual image on top of one of said at least two background.

On contrary to the known proposals and in a characteristic manner, the method of the first aspect comprises altering a percentage of the background pixels of any of said at least two background bitmaps, that are randomly selected, into said colour of text pixels so that obtaining a time-changing combined image cannot be done by a screenshot.

The background colour preferably will be white and the text colour will be black, therefore the highest initial contrast is achieved. However, the method may allow altering the colours with different contrasts.

According to a preferred embodiment, the preferable percentage of the background pixel that would be altered is 80-85%. However other percentages could be also possible for instance a fraction of 75-90%.

According to an embodiment, the textual information can be encrypted, by using any known encrypted algorithm, before being presented on the screen.

Preferably, text pixels are chosen to be below high-resolution.

Generally, the length of the textual information will be restricted to a maximum value. On the other hand, the time in which said bitmapped textual image is presented on the screen will comprise a period between one to ten seconds in order to difficult capturing strategies. After the lifespan time has been exceeded, the information may be removed, so that it is not visible anymore.

To further protect user's or author's privacy, the textual information may be present solely, without any contextual information. In particular, the screen of the displaying device may not show: the name of the author, any previous messaging history, the current date, the date/time when the message was created/sent/received/, etc.

According to a second aspect there is provided a system for image capturing prevention of information displayed on a screen. The system comprising: a user computing device with a screen configured to present a textual information on said screen, therefore providing a bitmapped textual image; a timer configured to limit the time in which said bitmapped textual image is presented on said screen; means for generating at least two background bitmaps of said bitmapped textual image using a colour for background pixels different from colour for text pixels; and means for displaying said bitmapped textual image on top of the background.

In a characteristic manner, the system of the second aspect further comprises means for altering a percentage of said background pixels of any of said at least two background bitmaps into said colour of text pixels so that obtaining a time-changing combined image cannot be done by a screenshot.

According to an embodiment, the system can also include means for encrypting the textual information before being presented on the screen.

In still another aspect, a computing device includes a memory configured to store instructions and a processor configured to execute the instructions to perform a method according to claim 1.

In still another aspect, there is provided a computer program product having program instructions for instructing a processor to altering a percentage of the background pixels of any of at least two background bitmaps, randomly selected, into the colour of text pixels obtaining a time changing combined image, when said program instructions are executed on a computer, a digital signal processor, a field-programmable gate array, an application-specific integrated circuit, a micro-processor, a micro-controller, or any other form of programmable hardware.

In the invention, if the user takes a screenshot of the shown text + background image, the screenshot will capture the text on a single background image, which will look like clutter only. Moreover, it prevents spontaneous, low-effort strategies to capture message content. Taking screenshots becomes impossible.

The invention cannot be broken by creating artificial workload on the user computing device so that the code does not get executed timely. If this happens, the resulting text visualisation becomes unreadable and therefore protects the message effectively.

### Brief Description of the Drawings

The previous and other advantages and features will be more fully understood from the following detailed description of embodiments, with reference to the attached, which must be considered in an illustrative and non-limiting manner, in which:
Fig. 1 shows an example of a screenshot of a textual image where the background image contains 85% cluttered pixels, according to an embodiment of the invention.
Fig. 2 shows an example of a screenshot of a textual image where the background image contains 50% cluttered pixels. Since the rapid alteration of 85% cluttered images cannot be displayed on static paper, this image approximates what the user will see on the screen when viewing the message.
Fig. 3 and 4 are flow diagrams of the different steps followed in the present invention according to some embodiments.
Fig. 5 is an illustration of the resulting process when keeping only the pixels of the letter "stable", that is, the letter appears darker when the single images are presented in fast alteration.
Fig. 6 is a schematic illustration on how a message is viewed on the user computing device once executed by the present invention.
Fig. 7 is an illustration of different levels of cluttering (i.e. higher contrast, higher readability) that can be obtained by the present invention.

### Detailed Description of the invention

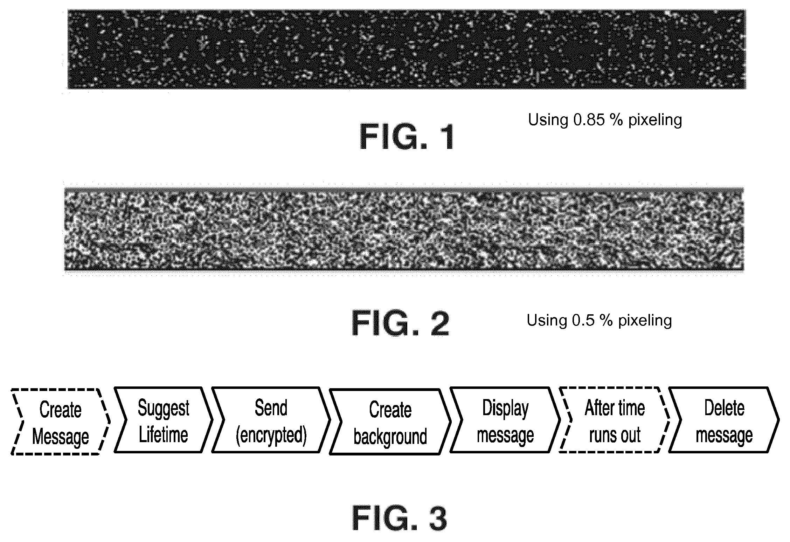

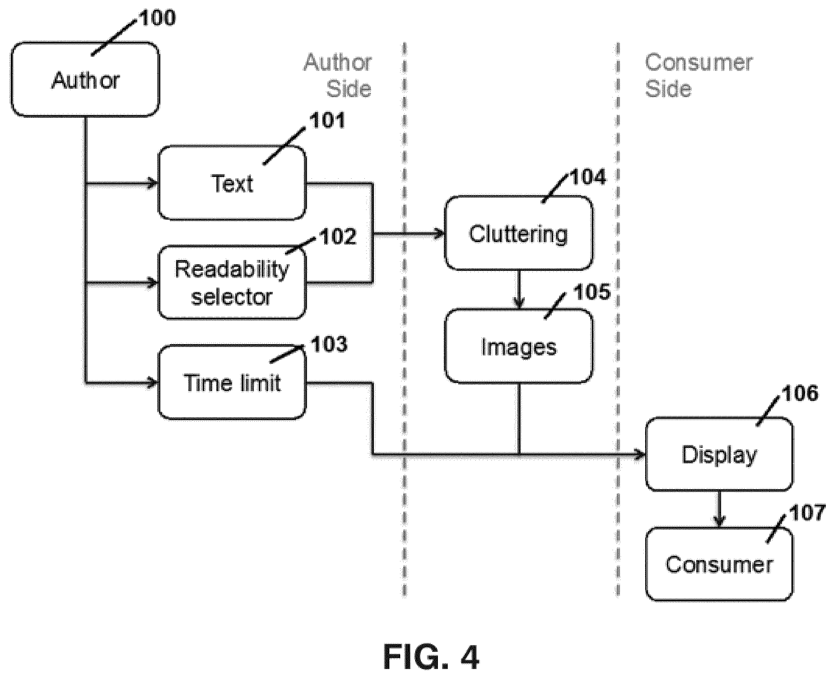

In reference to Figs. 3 and 4 are described all the different steps that can be followed while executing the proposed method of the invention (not all of them are necessary) in order to prevent the image capturing according to some embodiments. The basic idea is to allow the exchange of information, i.e. a message, between two entities, an *author* and one or several *consumers or users.* While the consumers (users) are always human beings provided by computing devices such as a smartphones, a tablet PCs, PDAs, etc. the author may be another human being or an algorithm executed in a processor of at least a computing device.

Initially, the *author* 100 composes said message preferably in form of a *text (textual information)* 101. The author 100, if desired, may adjust readability of the text, either automatically or manually, by means of the readability selector 102. This offers a balance between presenting the message in a more readable versus a more secure way.

Next, the author 100 specifies the time limit 103, i.e. the maximum time that the message will be readable once it is first accessed. In order to ensure that a consumer will have time to read the message completely, the invention may suggest or enforce a maximum length of the message or a minimum time limit. A logical implementation would be that the longer the lifespan, the more text can be exchanged.

Depending on the context of use the author 100 can define the consumers 107 at this point and send/publish 106 the text. This sending, according to an embodiment, may be encrypted (see Fig. 3) in order to improve security. In this step, the text message may be transmitted from the author's computing device to a plurality of consumers' computing devices.

Next, depending on the message input and the selected readability, the method involves creating at least two background bitmaps or cluttering images 104. A computing system will create several of said images (preferably the default colour will be white) that are big enough to fit the text (preferably default colour black) 105. Then, in any of said images or background bitmaps, it turns a percentage of pixels into the text colour, preferably in a random manner, so obtaining a time changing combined image that cannot be captured by a screenshot

As opposed to US-A-5905505, the invention generates a combined image, only one, that is the result of altering the colour of the background pixels of any of the images of the background bitmaps, to said text colour. Moreover, the algorithm according to a preferred embodiment turns roughly a fraction of 80-85% of the pixels dark.

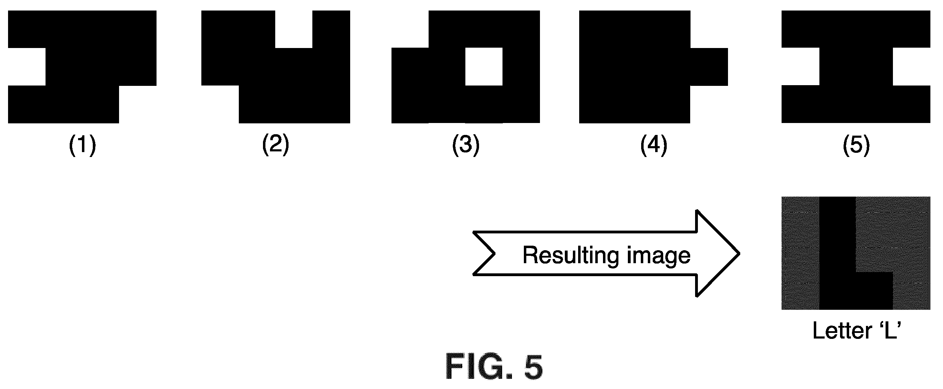

Then, message is displayed 106, in the form of a bitmapped textual image, on top of one of these background images or background bitmaps. By rapidly altering the background images, the letters become "stable" and hence visible for the human eye (Fig. 5). If the message is shown on a single of these background, it becomes impossible for the human eye to detect any known shape and, therefore, to identify any of the letters. If the consumer now takes a screenshot, the screenshot will capture the message on a single background image. Since a significant majority of the pixels have the colour of the text, the text is very well obscured. The human eye will only see clutter (see Fig. 1).

At the same time that the message is viewed for the first time, a timer can be initialized with the specified time limit. Once the time has reached zero, the message can be deleted and wiped from the memory of the consumers' computing device. The time will continue running even if the user/consumer closes the message before it runs out.

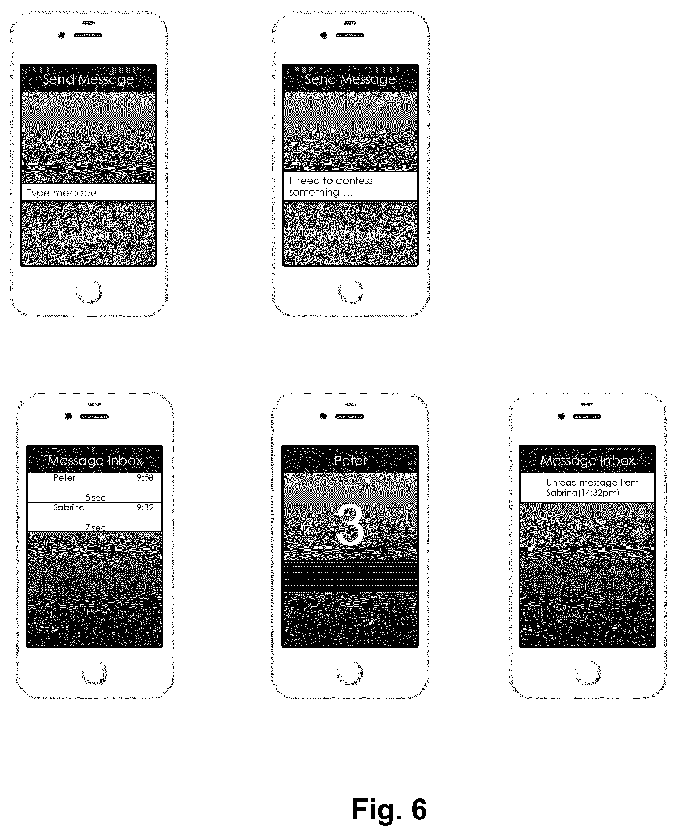

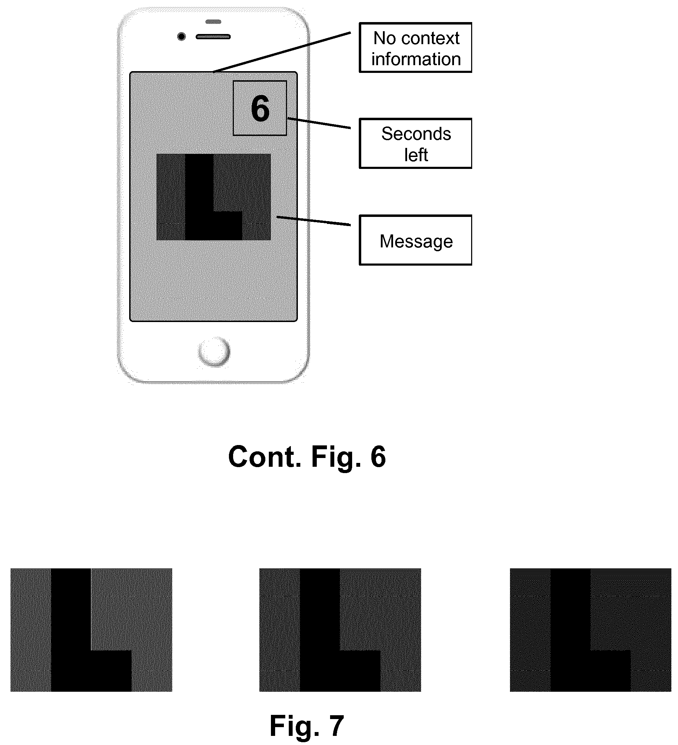

Preferably, according to the example illustrated in Fig. 6, the message (or bitmapped textual image) will be presented in a way that the display of the computing device only shows the text and the timer. Preferably, no indication of the context is visible or presented; in particular there is no disclosing of the identity of the author or the consumer. Furthermore, contextual information, such as time, date, or location of the presentation is preferably not provided.

Fig. 7 illustrates some results of the different levels of cluttering: higher contrast, higher readability that can be achieved with the invention. It has to be noted that the higher the contrast, the more readable the message becomes (*readability*), and the more susceptible it gets to by readable on screenshots (*security*). The concept of contrast is very important in the invention. Contrast refers to the ratio of the maximum luminance (illumination intensity) in an image to the minimum luminance. When message it is presented on a single, cluttered image, the contrast between the clutter and the text will be zero, as both uses the same colour. However, by rapidly alternating the cluttered images, the parts that are not overwritten by text will by more likely to alternate between background and text-colour. As a consequence, the perceived colour of the background will tend towards the contrast between the background colour and a fraction of the luminance of the text colour. In the case of displaying black text on a series 80% black / 20% white background images, the background will tend to appear as dark-grey, and ideally create 20% contrast between text and background.

However, the actually perceived contrast will depend also on a number of external factors, such as luminance characteristics of the screen, the actual screen settings (brightness, contrast), the colours chosen for background and text, how fast the images alternate, how many different background images are used, to what extend the background images differ from each other, the method used for cluttering the background image, and the contrast perception of the consumer.

The proposed method can probe and use these factors to determine the idea ratio of clutter on the background images.

One way to alter the contrast is to alter the fraction of pixels that are turned into text colour. The more pixels are turned into text colour, the less readable and the more secure the message becomes. As said, the preferable ration for the black and white colour pair is 80-85%. On another hand, the invention also allows the author to choose the fraction of "clutter" pixels from a continuum with the extremes being labelled "prefer readability" and "prefer security". Preferably, the extremes refer to a fraction of 75-90% for black & white.

In an embodiment, to make it easier to judge the levels of readability and security, the author may be allowed to preview the method's presentation of the message before sending it.

The number of background images used has an impact on the perceived contrast during the presentation. The more images are used, the more likely it is for each pixel that the perceived contrast to the message increases. Hence, using more background images leads to better readability. Using fewer background images has the advantage that fewer resources (memory and CPU) are needed to create and store the images. As mentioned in US-A-5905505, using fewer background images has the advantage that they are better in preventing automated algorithms from averaging pixels and extract the message via OCR. On the other hand, using more images make the perception and interpretation of the message easier for the human eye. A preferable amount of background images that would be used in the present invention is 5-7.

Another important issue is the choice of the colours for text and background pixels. The preferable colours are black and white, which have the highest initial contrast. However, the method may allow altering the colours with different contrasts. In this case, the configuration of other aspects might have to be adapted. In general, this means that with lower inter-colour contrast, other factors have to be changed to compensate. Preferably, the fraction of cluttered pixels will be reduced with reducing inter-colour contrast.

In order to increase readability while preserving security, the algorithm that creates the random "noise" images, which generated at least two background bitmaps, may employ more clever strategies than just turning pixels into text colour randomly. For example, instead of turning single pixels into text colour at a time, the algorithm can, according to alternative embodiments, turn several neighbouring, adjacent or consecutive, pixels (e.g. a 3x1 line, a 2x2 box, or up to whole lines and rows) into text colour, which may lead to increased security without sacrificing readability.

In order to avoid simplified strategies to break the cluttering mechanism, the invention has to employ random factors when deciding which pixel to turn which colour. However, although being highly unlikely, this might lead to background images, which are almost identical (the extreme case being completely identical). Therefore, the proposed method may employ checks on the images that compute the difference between the two images, e.g. by determining the fraction of pixels that are different between each of the images. Until this fraction is large enough, new background images are created.

How fast the background images are alternated also determines the perceived contrast between background and text. When approaching unlimited alteration speed, the contrast between one visible pixel and the text approaches the average of the colour, i.e. when using 5 background images, and one pixel is black in 4 of them, and white in the remaining one, the colour of this pixel will approach 80% grey or 20% contrast to the text colour. However, in reality the speed of the alteration will be limited by the computing power of the hardware that runs the method. The slower the alteration, the lower the perceived contrast. This means, that low computing power will lead to reduced readability, but not jeopardise security.

The method may also allow the author to keep the message, e.g. to proof that something was send, or for later reference.

Finally, for security of the message, the pixel size is an important variable. The higher the pixel size, the finer the resolution will be. The finer the resolution, that is, the more pixels a letter is comprised of, the easier it becomes to identify shapes. Thus, the pixel size of the text should not be chosen to high-resolution. On high-resolution displays this can even mean to reduce the display resolution for the time of the text presentation, so that a screenshot would not be too fine-grained.

The scope of the present invention is defined in the following set of claims.

## Claims

1. A method for image capturing prevention of information displayed on a screen, said method comprising:
- presenting a textual information on a screen of at least one user computing device therefore providing a bitmapped textual image;
- limiting the time in which said bitmapped textual image is presented on said screen;
- generating at least two background bitmaps of said bitmapped textual image by using a colour for background pixels of said background bitmaps different from colour for text pixels; and
- displaying said bitmapped textual image on top of one of said at least two backgrounds, **characterized in that** the method comprises altering a percentage of the background pixels of any of said at least two background bitmaps, that are randomly selected, into said colour of text pixels, so that obtaining a time-changing combined image cannot be done by a screenshot.

2. A method according to claim 1, wherein said percentage comprises at least a fraction of 80-85% of the background pixels.

3. A method according to claim 1, wherein said percentage comprises at least a fraction of 75-90% of the background pixels.

4. A method according to claim 1, wherein said altering of the percentage of the background pixels is randomly performed.

5. A method according to claim 1, wherein said at least two background bitmaps comprises an amount between five to seven background bitmaps.

6. A method according to claim 1, comprising encrypting said textual information before being presented on said screen.

7. A method according to claim 1, wherein said textual information comprises a maximum length of the text.

8. A method according to claim 1, wherein said limiting time comprises a minimum time limit of around 1 to 10 seconds.

9. A method according to claim 1 or 8, comprising deleting the bitmapped textual image after said limiting time has reached zero under a decrease pattern.

10. A method according to claim 1, wherein readability of the bitmapped textual image is selected either automatically or manually by an individual.

11. A method according to claim 1, wherein said randomly selection of said at least two background bitmaps is done to obtain at least a 20% contrast between text and background.

12. A method according to claim 1, wherein at least one of said background colour is white while said text is black.

13. A method according to claim 1, wherein said text pixels are chosen to be below high-resolution.

14. A method according to previous claims, further comprising randomly altering a percentage of adjacent or consecutive pixels of said background pixels.

15. A system for image capturing prevention of information displayed on a screen, said system comprising:
- a user computing device with a screen configured to present a textual information on said screen, therefore providing a bitmapped textual image;
- a timer configured to limit the time in which said bitmapped textual image is presented on said screen;
- means for generating at least two background bitmaps of said bitmapped textual image using a colour for background pixels different from colour for text pixels; and
- means for displaying said bitmapped textual image on top of the background, **characterized in that** further comprises:
- means for altering a percentage of said background pixels of any of said at least two background bitmaps into said colour of text pixels so that obtaining a time-changing combined image cannot be done by a screenshot.

16. A system according to claim 14, further comprising means for encrypting said textual information before being presented on the screen.

17. A computer program product having program instructions for instructing a processor to altering a percentage of the background pixels of any of at least two background bitmaps, randomly selected, into the colour of text pixels obtaining a time changing combined image, when said program instructions are executed on a computer, a digital signal processor, a field-programmable gate array, an application-specific integrated circuit, a micro-processor, a micro-controller, or any other form of programmable hardware.
